# EUROPÄISCHE PATENTSCHRIFT

(11) **EP 0 440 063 B1**
(45) Veröffentlichungstag und Bekanntmachung des Hinweises auf die Patenterteilung: **30.07.1997**
(21) Anmeldenummer: 91100718.5
(22) Anmeldetag: 22.01.1991
(51) Int. Cl.: H04Q 3/62, H04Q 11/04

(54) **Breitbandnebenstellenanlage**
Broadband pabx
Central privé à large bande

(30) Priorität: 01.02.1990 DE 4002862
(43) Veröffentlichungstag der Anmeldung: 07.08.1991
(73) Patentinhaber: Alcatel SEL Aktiengesellschaft, D-70435 Stuttgart (DE)
(72) Erfinder: Stannard, Richard, W-7000 Stuttgart 40 (DE); Dunger, Hartmut, W-7254 Hemmingen (DE); Werbus, Volker, W-7000 Stuttgart 30 (DE)
(74) Vertreter: Pohl, Herbert, Dipl.-Ing.

(56) Entgegenhaltungen:
- EP-A- 0 239 908
- EP-A- 0 333 126
- US-A- 3 997 736
- NTZ NACHRICHTENTECHNISCHE ZEITSCHRIFT Bd. 42, Nr. 8, 1989, BERLIN DE Seiten 486 - 493 P. PERNSTEINER ET AL 'Video- und Datenkomunikation im VBN'
- NTZ NACHRICHTENTECHNISCHE ZEITSCHRIFT Bd. 42, Nr. 8, 1989, BERLIN DE Seiten 472 - 477 , XP39163 'Vom Vorlauefer-Breitband-Netz ( VBN) zum Glasfaser- Teilnemeranschluss'

## Beschreibung

Die Erfindung geht von einer Breitbandnebenstellenanlage zur Vermittlung von Video-, Ton- und Datennachrichten aus.

Das öffentliche vermittelnde Breitbandnetz VBN der Deutschen Bundespost ermöglicht eine übermittlung von Bild und Ton in Fernsehqualität, bei einer Datenrate von 140 Mbit/s. Das VBN stellt ein Breitband-Selbstwählnetz für eine große Anzahl von Breitbandendgeräte-Teilnehmer, wie Fernsehtelefone, Videokonferenzen, dar. Jeder Teilnehmer wird über eine die 140-Mbit/s-Signale in Video-, Audio- und Datensignale wandelnde Teilnehmeranschlußeinheit TAE mit dem VBN verbunden. über eine solche Teilnehmeranschlußeinheit kann auch eine Breitbandnebenstellenanlage an das VBN angeschlossen werden. Diese bekannte Breitbandnebenstellenanlage besteht aus einem Videokoppelfeld, einem Audiokoppelfeld und einer zentralen Steuerung. Über diese Anlage können bis zu 15 Teilnehmer zur Videokommunikation auf das VBN zugreifen. Jedes Breitbandendgerät enthält dazu einen eigenen Videotelefon-Controller und einen abgesetzten Bedienplatz zur Steuerung des Verbindungsaufbaus und zur Signalisierung in VBN (P. Pernsteiner, F. Brendel, ntz Band 42 (1989), Heft 8, Seiten 486 bis 493).

Durch den jedem Breitbandendgerät zugeordneten abgesetzten Bedienplatz, wird praktisch eine Teilnehmeranschlußeinheit TAE für 15 Teilnehmer nutzbar, jedoch sind keinerlei eine Nebenstellenanlage kennzeichnende Funktionen, d.h. beliebige intern und externe Verbindungen, möglich.

Aus der Patentschrift US-3997736 ist des weiteren eine Breitbandnebenstellenanlage bekannt, bei der ein Breitbandkoppelfeld zum Schalten einer Breitbandverbindung zwischen einem rufenden und einem gerufenen Teilnehmerendgerät getrennt von einem regulären Koppelfeld vorhanden ist. Teilnehmerendgeräte sind mit dem regulären Koppelfeld und über jeweils eine Breitbandeinheit mit dem Breitbandkoppelfeld verbunden. Für den Aufbau einer Breitbandverbindung wird zunächst in der üblichen Art und Weise eine Verbindung über das Koppelfeld von dem rufenden zu dem gerufenen Teilnehmerendgerät aufgebaut. Eine Breitbandsteuerschaltung wertet bei diesem Verbindungsaufbau entstehende Signale, die den beiden Teilnehmerendgeräten zugeordnet sind, aus und baut eine Breitbandverbindung zwischen den den beiden Teilnehmerendgeräten jeweils zugeordneten Breitbandeinheiten durch das Breitbandkoppelfeld auf.

Die Aufgabe gemäß der Erfindung besteht darin, eine Breitbandnebenstellenanlage zu realisieren, bei der alle angeschlossenen Endgeräte ohne einen eigens zugeordneten abgesetzten Bedienplatz vermittelbar sind.

Diese Aufgabe wird erfinderungsgemäß durch die technische Lehre des Hauptanspruches gelöst.

Dadurch, daß erfindungsgemäß die mit einem Breitbandkoppelfeld verbundenen Breitbandendgeräte an eine an sich bekannte schmalbandige Fernsprechnebenstellenanlage wie "normale" schmalbandige Fernsprechteilnehmer angeschlossen sind und außerdem ein Signalisierungsanpassungsmodul eine bidirektionale Signalisierungsumsetzung - Breitbandnetz VBN und Fernsprechnebenstellenanlage - in eine für die Fernsprechnebenstellenanlage vorgegebene übliche Signalisierung ausführt, können alle angeschlossenen Breitbandendgeräte vermittelt werden, ohne daß jedes Breitbandendgerät einen eigenen abgesetzten Bedienplatz benötigt. Somit können auch in vorteilhafter Weise alle Leistungsmerkmale der Fernsprechnebenstellenanlage den Breitbandendgeräten zur Verfügung gestellt werden.

Alle Breitbandendgeräte können somit eigenständig Verbindungen auf- und abbauen.

Besonders vorteilhaft ist ferner die erfindungsgemäße Verwendung eines digitalen Sprachspeichers in dem Signalisierungsanpassungsmodul, da alle notwendigen Signale in Sprache umgesetzt und somit für den Teilnehmer verständlich werden. Durch die sprachgesteuerte Benutzerführung kann eine kostengünstige Fernsprechnebenstellenanlage zur Steuerung des Verbindungsauf- und abbaus benutzt werden, ohne daß zur Signalisierungsumsetzung Änderungen notwendig werden.

Außerdem kann in vorteilhafter Ausgestaltung der Erfindung eine Signalisierungsanpassung an verschiedene öffentliche Netze, wie z.B. über eine Teilnehmeranschlußeinheit für Netze mit einer Übertragungsrate von 2 Mbit/s oder für ein diensteintegrierendes Netz (ISDN) dadurch erfolgen, daß das Signalisierungsanpassungsmodul entsprechend umprogrammiert wird.

Weitere vorteilhafte Ausgestaltungen des Gegenstandes der Erfindung sind den Unteransprüchen zu entnehmen.

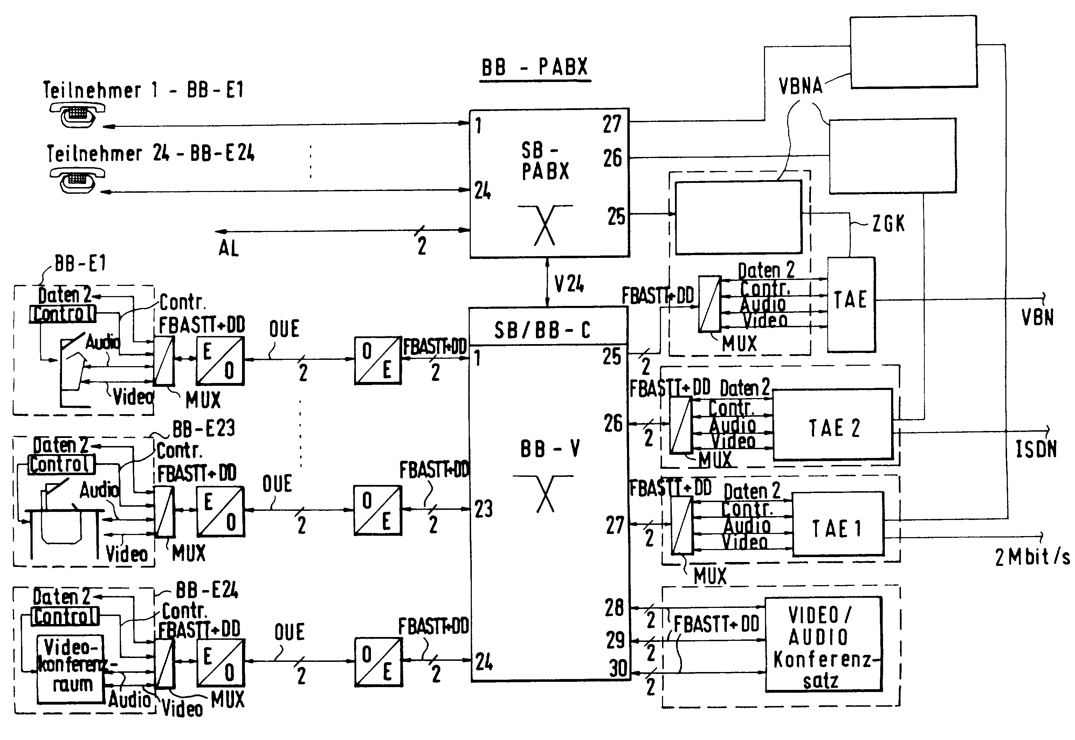

Ein Ausführungsbeispiel wird im folgenden anhand der Zeichnung erläutert.

Die Zeichnung zeigt ein Blockschaltbild einer erfindungsgemäßen Breitbandnebenstellenanlage.

Eine Breitbandnebenstellenanlage BB-PABX gemäß der Erfindung, besteht aus einem Breitbandkoppelfeld BB-V, das im wesentlichen eine im Raumvielfach aufgebaute Matrix mit 32 Ein-/Ausgängen für die durchzuschaltenden Breitbandsignale (Video, Audio, Daten) ist. Das Breitbandkoppelfeld enthält Decoder zur Adressierung der Koppelpunkte, Speicher zum Halten der Einschalt- oder Ausschaltinformation und eine serielle Schnittstelle (V24) für Steuerdaten.

Ein solches Breitbandkoppelfeld BB-V, wie im Ausführungsbeispiel benutzt, ist von der Firma SVT Video Systems, Ltd., Essex, England unter der Bezeichnung AVS 264 Video Matrix erhältlich.

An die mit 1 bis 24 bezeichneten Ein-/Ausgänge des Breitsbandkoppelfeldes BB-V sind, wie in der Figur gezeigt, 24 mit BB-E1 bis BB-E24 bezeichnete Breitbandendgeräte über je eine optische Übertragungsstrecke OUE, in die entsprechende elektro/optische E/O und optisch/elektrische Wandler O/E eingefügt sind, angeschlossen.

Das über das Breitbandkoppelfeld BB-V schaltbare analoge Signal besteht aus einem Videosignal mit zwei Audiokanälen FBASTT und aus zwei Datenkanäle DD und wird zur weiteren Verarbeitung in jedem Endgerät BB-E1, ..., BB-E24 über entsprechende Multiplexer/Demultiplexer MUX umgesetzt.

Die Breitbandendgeräte können z.B. Bildfernsprechgeräte, multifunktionale Arbeitsplätze oder auch ein Videokonferenzraum BB-E24 sein. Zur Herstellung von Videokonferenzverbindungen ist an die mit 28 bis 30 bezeichneten Ein-/Ausgänge des Breitbandkoppelfeldes BB-V, entsprechend wie für die Breitbandendgeräte, ein Videokonferenzsatz über Multiplexer/Demultiplexer MUX angeschlossen.

Ein weiterer mit 25 bezeichneter Ein-/Ausgang des Breitbandkoppelfeldes BB-V ist über einen entsprechenden Multiplexer/Demultiplexer MUX mit einer Teilnehmeranschlußeinheit TAE für ein öffentliches, vermittelndes Breitbandnetz VBN der Deutschen Bundespost verbunden, um externe Breitbandverbindungen herstellen zu können.

Optional ist ein erster mit 27 bezeichneter zusätzlicher Ein/Ausgang des Breitbandkoppelfeldes BB-V über einen entsprechenden Multiplexer/Demultiplexer MUX mit einer ersten zusätzlichen Teilnehmeranschlußeinheit TAE1 für Netze mit einer Übertragungsrate von 2 Mbit/s (Videokonferenzen, z.B. über Satelit) und ein zweiter zusätzlicher mit 26 bezeichneter Ein/Ausgang des Breitbandkoppelfeldes BB-V über einen entsprechenden Multiplexer/Demultiplexer MUX mit einer zweiten zusätzlichen Teilnehmeranschlußeinheit TAE2 für ein diensteintegrierendes Netz - ISDN - verbunden.

Weiterhin ist eine schmalbandige Fernsprechnebenstellenanlage SB-PABX über die serielle V-24-Schnittstelle und einen Schmalband/Breitband-Verbindungsrechner SB/BB-C mit dem Breitbandkoppelfeld BB-V verbunden; um den Auf- und Abbau von Breitbandverbindungen zu steuern. An die Fernsprechnebenstellenanlage sind ebenfalls die 24 Breitbandendgeräte angeschlossen und zwar an die mit 1 bis 24 bezeichneten Ein-/Ausgänge. Dabei sind die Breitbandendgeräte wie Schmalband-Fernsprechteilnehmer über übliche 2-Draht-Schnittstellen mit der Fernsprechnebenstellenanlage verbunden und können damit wie übliche Fernsprechapparate vermittelt werden.

Dazu ist ferner erfindungsgemäß ein Schmalband/Breitband-Signalisierungsanpassungsmodul VBNA einerseits wie ein Schmalband-Fernsprechteilnehmer mit einem weiteren Ein-/Ausgang 25 der Fernsprechnebenstellenanlage SB-PABX und andererseits über einen Zeichengabekanal ZGK mit der Teilnehmeranschlußeinheit TAE für das vermittelnde Breitbandnetz VBN verbunden.

Optional sind mit 26 und 27 bezeichnete Ein/Ausgänge der Fernsprechnebenstellenanlage zur Signalisierungsanpassung über weitere Signalisierungsanpassungsmodule mit der ersten zusätzlichen Teilnehmeranschlußeinheit TAE1 bzw. mit der zweiten Teilnehmeranschlußeinheit TAE2 verbunden.

An der Fernsprechnebenstellenanlage SB-PABX können auch weitere (nicht gezeigt) Fernsprechteilnehmer angeschlossen sein, die über Amtsleitungen AL sowohl analog als auch digital (ISDN) mit dem öffentlichen Fernsprechnetz verbindbar sind. Jedoch nur die mit Breitbandendgeräte ausgestattteten Teilnehmer haben die Berechtigung über das Breitbandnetz VBN Verbindungen aufzubauen.

Um nun eine interne oder externe Breitbandverbindung aufbauen zu können, wird immer über die Fernsprechnebenstellenanlage SB-PABX eine schmalbandige Fernsprechverbindung hergestellt. Dazu weist das Signalisierungsanpassungsmodul VBNA eine Rechnereinheit bestehend aus einem Mikroprozessor (z.B. aus der Familie MCS 51 VON Intel) mit zugehörigem Programm- und Arbeitsspeicher (z.B. EPROM und RAM) und einem Signalisierungssender/empfänger, vorzugsweise einen Mehrfrequenzcodesender/empfänger, sowie einen digitalen Sprachspeicher auf. Der Zeichengabekanal ZGK ist ferner über eine HDLC-Schnittstelle (High Level Data Link) mit dem Signalisierungsanpassungsmodul verbunden.

Das Signalisierungsanpassungsmodul VBNA setzt eine für das Breitbandnetz VBN gemäß FTZ Richtlinie 141R50 vorgegebene Zeichengabe in eine für die Fernsprechnebenstellenanlage vorgegebene Signalisierung nach dem Mehrfrequenzcodewahlverfahren um, wobei (wird noch erläutert) insbesondere für die von der Teilnehmeranschlußeinheit TAE kommende Zeichengabe mittels Einblendung von Ansagen eine sprachgesteuerte Benutzerführung erfolgt.

Ausgehend von einem Ruhezustand (nicht vermittelt) der Breitbandnebenstellenanlage BB-PABX, wird zunächst der Fall einer abgehenden Belegung in das vermittelnde Breitbandnetz VBN beschrieben.

Dazu wird zuerst eine schmalbandige Verbindung innerhalb der Fernsprechnebenstellenanlage SB-PABX von einem Teilnehmer A, z.B. das Breitbandendgerät BB-E1, zum Signalisierungsanpassungsmodul VBNA, das den Status eines weiteren Fernsprechteilnehmers der Fernsprechnebenstellenanlage hat, aufgebaut. Jetzt wird, gesteuert durch den Mikroprozessor, eine Ansage "Wählton" aus dem Sprachspeicher ausgelesen und zum Teilnehmer A zur Signalisierung der Wahlaufnahmebereitschaft gesendet. Gleichzeitig wird der Mehrfrequenzcodesender/empfänger in den Modus "Empfangen" geschaltet, um die nun vom Teilnehmer A über den schmalbandigen Sprachkanal abgegebene Wahl aufzunehmen, d.h. Mehrfrequenztonpaare zu detektieren. Die empfangenen Tonpaare werden umgesetzt und der Teilnehmeranschlußeinheit TAE zum Aufbau einer Verbindung über den Zeichengabekanal ZGK mitgeteilt.

Wird das Zustandekommen einer Verbindung über das Breitbandnetz VBN durch entsprechende Zeichengabe festgestellt, wird dann eine zunächst schmalbandige Fernsprechverbindung mit dem Teilnehmer A hergestellt.

Außerdem wird über den Schmalband/Breitband-Verbindungsrechner SB/BB-C über das Breitbandkoppelfeld BB-V eine Verbindung Teilnehmer A zur Teilnehmeranschlußeinheit TAE aufgebaut, so daß, falls sich beide Teilnehmer auf eine Breitbandverbindung einigen, durch Bedienen entsprechnder Tasten am Breitbandendgerät BB-E1, diese in Anspruch genommen wird. Dadurch erfolgt eine Bild-, Ton- und Datendurchschaltung über das Breitbandnetz.

Löst einer der Teilnehmer aus, wird das entsprechende Auslösezeichen entweder über die Fernsprechnebenstellenanlage, umgesetzt durch das Signalisierungsanpassungsmodul, zum Breitbandnetz VBN geleitet oder entsprechend umgekehrt über die Teilnehmeranschlußeinheit TAE, wiederum umgesetzt durch das Anpassungsmodul, zur Fernsprechnebenstellenanlage gesendet und schmalbandig sowie, gesteuert über den Verbindungsrechner SB/BB-C auch breitbandig ausgelöst.

Für den Fall einer ankommenden Belegung, d.h. A-Teilnehmer über das VBN wünscht B-Teilnehmer der Breitbandnebenstellenanlage BB-PABX, wird der ankommende Verbindungswunsch über den Zeichengabekanal ZGK gesendet und im Anpassungsmodul VBNA registiert. Dann erfolgt eine entsprechende Umsetzung, in dem gesteuert durch die Rechnereinheit, der Mehrfrequenzcodeempfänger/sender jetzt in den Modus "Senden" eingestellt wird und der Wahlinformation entsprechende Mehrfrequenztonpaare gesendet werden. Die Fernsprechnebenstellenanlage SB-PABX schaltet die gewünschte Verbindung, so daß der B-Teilnehmer gerufen wird.

Wenn sich der B-Teilnehmer meldet, wird wieder zuerst die schmalbandige Fernsprechverbindung hergestellt und wenn eine Breitbandverbindung gewünscht wird, erfolgt unmittelbar danach dann in analoger Weise wie bei der abgehenden Belegung beschrieben, eine Durchschaltung einer Breitbandverbindung. Analog erfolgt auch eine Auslösung der Verbindung.

Zusätzlich zur Mehrfrequenztonsignalisierung können auch weitere Ansagen zur sprachgesteuerten Benutzerführung des Breitbandendgeräteteilnehmers erfolgen. Dazu können z.B. Ansagen, wie "Freiton", "Reservierte Verbindung", "Störung" oder "Falsche Rufnummer" aus dem Sprachspeicher ausgelesen und zum Teilnehmer eingeblendet werden.

Somit erhält der Breitbandendgeräteteilnehmer in einfacher kostengünstiger Weise, ohne daß Änderungen in der Fernsprechnebenstellenanlage erforderlich sind, klar verständliche Informationen. Dies bedeutet eine wesentliche Vereinfachung der Bedienung eines öffentlichen Breitbandnetzanschlusses, ohne daß jedem Teilnehmer ein eigener Bedienplatz zugeordnet werden müßte.

Ferner stehen den Breitbandendgeräten der erfindungsgemäßen Breitbandnebenstellenanlage BB-PABX alle Leistungsmerkmale der Fernsprechnebenstellenanlage SB-PABX zur Verfügung (z.B. Konferenz, Rückfrage), da diese Leistungsmerkmale in einfacher Weise über die Schmalbandverbindung einleitbar sind und danach lediglich noch die Breitbandverbindung, wie beschrieben, aktiviert werden muß.

Die erfindungsgemäße Breitbandnebenstellenanlage ist in keiner Weise nur auf die im obigen Ausführungsbeispiel angegebenen Signalisierungen beschränkt, da diese durch einfache Programmierung des Signalisierungsanpassungsmoduls jegliche Signalisierungsart umsetzen kann, um z.B. die optional vorgesehenen Anschlüsse zum ISDN oder zum 2 Mbit/s-Netz nutzen zu können.

## Patentansprüche

1. Breitbandnebenstellenanlage (BB-PABX)
- mit einem Breitbandkoppelfeld (BB-V) zur Vermittlung von Video-, Ton- und Datennachrichten,
- mit einer Vielzahl von Breitbandendgeräten (BB-E1,..., BB-E23, BB-E24), die an Ein/Ausgänge (1, 2 23, 24) des Breitbandkoppelfeldes (BB-V) angeschlossen sind,
- mit einer Teilnehmeranschlußeinheit (TAE) für ein öffentliches, vermittelndes Breitbandnetz (VBN), die mit einem weiteren Ein/Ausgang (25) des Breitbandkoppelfeldes (BB-V) verbunden ist,
- mit einer Fernsprechnebenstellenanlage (SB-PABX), an deren Ein/Ausgänge (1, ..., 24) die Vielzahl von Breitbandendgeräte wie Schmalband-Fernsprechteilnehmer angeschlossen sind, so daß zum Aufbau einer Breitbandverbindung zunächst eine Schmalbandverbindung aufgebaut werden kann,
- mit einem Schmalband-/Breitband-Signalisierungsanpassungsmodul (VBNA), das mit der Teilnehmeranschlußeinheit (TAE) und wie ein Schmalband-Fernsprechteilnehmer mit einem weiteren Ein/Ausgang (25) der Fernsprechnebenstellenanlage (SB-PABX) verbunden ist, zur Umsetzung einer in dein Breitbandnetz (VBN) verwendbaren Signalisierung in eine in der Fernsprechnebenstellenanlage (SB-PABX) verwendbaren Signalisierung und umgekehrt, und
- mit einem Schmalband/Breitband-Verbindungsrechner (SB/BB-C), der mit dem Breitbandkoppelfeld (BB-V) und der Fernsprechnebenstellenanlage (SB-PABX) zum Auf- und Abbau von Breitbandverbindungen verbunden ist.

2. Breitbandnebenstellenanlage nach Anspruch 1, in der das Signalisierungsanpassungsmodul (VBNA) eine Rechnereinheit und einen Signalisierungssender/empfänger enthält, so daß entweder die über einen Zeichengabekanal (ZGK) von der Teilnehmeranschlußeinheit (TAE) zum Signalisierungsanpassungsmodul übertragene, für das Breitbandnetz (VBN) vorgegebene Zeichengabe, gesteuert durch die Rechnereinheit, in eine für die Fernsprechnebenstellenanlage vorgegebene Signalisierung oder die von der Fernsprechnebenstellenanlage kommende Signalisierung in die für das Breitbandnetz vorgegebene Zeichengabe umgesetzt wird.

3. Breitbandnebenstellenanlage nach Anspruch 2, in der das Signalisierungsanpassungsmodul (VBNA) einen digitalen Sprachspeicher enthält, in dem für die im Breitbandnetz (VBN) vorgegebene Zeichengabe entsprechende Ansagen abgespeichert sind, die gesteuert durch die Rechnereinheit, zur sprachgesteuerten Benutzerführung über die Fernsprechnebenstellenanlage (SB-PABX) an die Breitbandendgeräte (BB-E1, ..., BB-E26) übertragen werden.

4. Breitbandnebenstellenanlage nach Anspruch 2 oder 3, in der das Signalisierungsanpassungsmodul (VBNA) mit einer ersten zusätzlichen Teilnehmeranschlußeinheit (TAE1) für ein Breitbandnetz mit einer übertragungsrate von 2 Mbit/s verbunden ist, wobei die erste zusätzliche Teilnehmeranschlußeinheit (TAE1) mit einem ersten zusätzlichen Ein/Ausgang (27) des Breitbandkoppelfeldes (BB-V) verbunden ist.

5. Breitbandnebenstellenanlage nach Anspruch 2 oder 3, in der das Signalisierungsanpassungsmodul (VBNA) mit einer zweiten zusätzlichen Teilnehmeranschlußeinheit (TAE2) für ein diensteintegrierendes Netz verbunden ist, wobei die zweite zusätzliche Teilnehmeranschlußeinheit (TAE2) mit einem zweiten zusätzlichen Ein/Ausgang (26) des Breitbandkoppelfeldes (BB-V) verbunden ist.

6. Breitbandnebenstellenanlage nach Anspruch 3, in der das Signalisierungsanpassungsmodul (VBNA) über eine mit der Rechnereinheit verbundene HDLC-Schnittstelle mit dem Zeichengabekanal (ZGK) in Verbindung steht.

7. Breitbandnebenstellenanlage nach Anspruch 2, in der das Signalisierungsanpassungsmodul (VBNA) als Signalisierungssender/Empfänger einen Mehrfrequenzcodesender/Empfänger enthält.

## Claims

1. Broad-band private automatic branch exchange (BB-PABX) comprising
- a broad-band switching network (BB-V) for switching video, sound, and data messages,
- a multiplicity of broad-band terminals (BB-E1, ..., BB-E23, BB-E24) connected to input/outputs (1, 2, ..., 23, 24) of the broad-band switching network (BB-V),
- a subscriber line unit (TAE) for a public switched broad-band network (VBN), said subscriber line unit (TAE) being connected to an additional input/output (25) of the broad-band switching network (BB-V),
- a telephone private automatic branch exchange (SB-PABX) having said multiplicity of broad-band terminals connected to its input/outputs (1, ..., 24) like narrow-band telephone subscribers so that, to set up a broad-band connection, a narrow-band connection can be set up first,
- a narrow-band/broad-band signalling conversion module (VBNA) connected to the subscriber line unit (TAE) and, like a narrow-band telephone subscriber, to a further input/output (25) of the telephone private automatic branch exchange (SB-PABX), for converting signalling usable in the broad-band network (VBN) into signalling usable in the telephone private automatic branch exchange (SB-PABX) and vice versa, and
- a narrow-band/broad-band connection computer (SB/BB-C) connected to the broad-band switching network (BB-V) and the telephone private automatic branch exchange (SB-PABX) for setting up and clearing broad-band connections.

2. Broad-band private automatic branch exchange according to Claim 1, wherein the signalling conversion module (VBNA) includes a computer unit and a signalling transmitter/receiver, so that, under the control of the computer unit, either the signalling specified for the broad-band network (VBN) and transmitted from the subscriber line unit (TAE) via a signalling channel (ZGK) to the signalling conversion module will be converted into signalling specified for the telephone private automatic branch exchange or the signalling coming from the telephone private automatic branch exchange will be converted into signalling specified for the broad-band network.

3. Broad-band private automatic branch exchange according to claim 2, wherein the signalling conversion module (VBNA) includes a digital speech memory in which announcements corresponding to the signalling specified in the broad-band network (VBN) are stored and, under control of the computer unit, said announcements are transmitted via the telephone private automatic branch exchange (SB-PABX) to the broad-band terminals (BB-E1, ..., BB-E26) for the purpose of speech-controlled user prompting.

4. Broad-band private automatic branch exchange according to Claim 2 or 3, wherein the signalling conversion module (VBNA) is connected to a first additional subscriber line unit (TAE1) for a broad-band network having a bit rate of 2 Mbit/s, said first additional subscriber line unit (TAE1) being connected to a first additional input/output (27) of the broad-band switching network (BB-V).

5. Broad-band private automatic branch exchange according to Claim 2 or 3, wherein the signalling conversion module (VBNA) is connected to a second additional subscriber line unit (TAE2) for an integrated services network, said second additional subscriber line unit (TAE2) being connected to a second additional input/output (26) of the broad-band switching network (BB-V).

6. Broad-band private automatic branch exchange according to Claim 3, wherein the signalling conversion module (VBNA) is connected to the signalling channel (ZGK) via an HDLC interface connected to the computer unit.

7. Broad-band private automatic branch exchange according to Claim 2, wherein the signalling conversion module (VBNA) contains a multifrequency-code transmitter/receiver as signalling transmitter/receiver.

## Revendications

1. Installation privée automatique de communication à large bande (BB-PABX) comportant
- un champ de couplage à large bande (BB-V) pour la commutation d'informations vidéo, d'informations audio et d'informations de données;
- une multiplicité de terminaux à large bande (BB-E1, ..., BB-E23, BB-E24), qui sont connectés à des entrées/sorties (1, 2, ..., 23, 24) du champ de couplage à large bande (BB-V),
- une unité de raccordement d'abonnés (TAE) pour un réseau public de commutation à large bande (VBN), qui est relié à une autre entrée/sortie (25) du champ du couplage à large bande (BB-V),
- une installation téléphonique privée automatique (SB-PABX), aux entrées/sorties (1, ..., 24) de laquelle sont connectés la multiplicité de terminaux à large bande tels que des abonnés téléphoniques à bande étroite, de sorte que pour l'établissement d'une liaison à large bande, tout d'abord une liaison à bande étroite peut être établie,
- un module (VBNA) d'adaptation de signalisation à bande étroite / à large bande, qui est relié à l'unité de raccordement d'abonnés (TAE) et, comme un abonné téléphonique à bande étroite, à une autre entrée/sortie (25) de l'installation téléphonique privée automatique (SB-PABX) pour la conversion d'une signalisation, pouvant être utilisée dans un réseau à large bande (VBN), en une signalisation pouvant être utilisée dans une installation téléphonique privée automatique (SB-PABX) et inversement, et
- un calculateur (SB/BB-C) pour les liaisons à bande étroite / à large bande, qui est relié à champ de couplage à large bande (BB-V) et à l'installation téléphonique privée automatique (SB-PABX) pour l'établissement et la suppression de liaisons à large bande.

2. Installation privée automatique de communication à large bande selon la revendication 1, dans laquelle le module (VBNA) d'adaptation de signalisation contient une unité de calcul et un émetteur/récepteur de signalisation, de sorte que soit la délivrance d'un signal transmise par une unité de raccordement d'abonnés (TAE) au module d'adaptation de signalisation par l'intermédiaire d'un canal (ZGK) de délivrance de signaux et prédéterminée pour le réseau à large bande (VBN), est convertie en une signalisation prédéterminée pour l'installation téléphonique privée automatique, soit la signalisation, qui arrive de l'installation téléphonique privée automatique, est convertie en la délivrance de signaux prédéterminée pour le réseau à large bande.

3. Installation privée automatique de communication à large bande selon la revendication, dans laquelle le module d'adaptation de signalisation (VBNA) contient une mémoire numérique de signaux vocaux, dans laquelle sont mémorisés, pour la délivrance de signaux prédéterminée dans le réseau à large bande (VBN), des annonces correspondantes qui sont transmises, d'une manière commandée par une unité de calcul, en vue du pilotage de l'utilisateur d'une manière commandée par la parole, aux terminaux à large bande (BB-E1, ..., BB-E26), par l'intermédiaire de l'installation téléphonique privée automatique (SB-PABX).

4. Installation privée automatique de communication à large bande selon la revendication 2 ou 3, dans laquelle le module d'adaptation de signalisation (VBNA) est relié à une première unité supplémentaire de raccordement d'abonnés (TAE1) pour un réseau à large bande, possède une cadence de transmission de 2 Mbits/s, la première unité supplémentaire de raccordement d'abonnés (TAE1) étant reliée à une première entrée/sortie supplémentaire (27) du champ de couplage à large bande (BB-V).

5. Installation privée automatique de communication à large bande selon la revendication 2 ou 3, dans laquelle le module d'adaptation de signalisation (VBNA) est relié à une seconde unité supplémentaire de raccordement d'abonnés (TAE2) pour un réseau à intégration de services, la seconde unité supplémentaire de raccordement d'abonnés (TAE2) étant reliée à une seconde entrée/sortie supplémentaire (26) du champ de couplage à large bande (BB-V).

6. Installation privée automatique de communication à large bande selon la revendication 3, dans laquelle le module d'adaptation de signalisation (VBNA) est relié par l'intermédiaire d'une interface HDLC, reliée à l'unité de calcul, au canal (ZGK) de délivrance de signaux.

7. Installation privée automatique de communication à large bande selon la revendication 2, dans laquelle le module d'adaptation de signalisation (VBNA) contient, en tant qu'émetteur/récepteur de signalisation, un émetteur/ récepteur de code à fréquences multiples.
